# EUROPEAN PATENT APPLICATION

(11) **EP 3 637 391 A1**
(43) Date of publication of application: **15.04.2020**
(21) Application number: 18814251.7
(22) Date of filing: 30.05.2018
(51) Int. Cl.: G09B 29/00, G01C 21/26, G06F 13/00, G08G 1/09, G08G 1/137

(54) **INFORMATION PROCESSING DEVICE**

(30) Priority: 07.06.2017 JP 2017112421
(71) Applicant: Pioneer Corporation, Tokyo 113-0021 (JP)
(72) Inventor: KODA, Takeshi, Kawagoe-shi Saitama 350-8555 (JP); MITO, Kenji, Kawagoe-shi Saitama 350-8555 (JP)
(74) Representative: Grünecker Patent- und Rechtsanwälte PartG mbB
(86) International application number: PCT/JP2018/020681
(87) International publication number: WO 2018/225596

(57) **Abstract**

An information processing device is provided capable of preventing tightening on a communication bandwidth due to an increase in communication amount. In the information processing device (1), a sensor data cache unit (11) acquires a detection result from a sensor (17), and a position derivation unit (13) and an object detection unit (14) acquire host vehicle position/posture reliability information and object reliability information, respectively. The object detection unit (14) next generates difference information on the basis of a high accuracy map (DB12) and the object reliability information, and a transmission unit (18) transmits the difference information. Then a confidence level generation unit (15) generates a confidence level from the host vehicle position/posture reliability information and the object reliability information, and a data utilization determination unit (16) determines whether or not to upload the difference information on the basis of the confidence level.

## Description

### BACKGROUND OF THE INVENTION

### Field of the Invention

The present invention relates to an information processing device that acquires peripheral information of a moving body such as a vehicle.

### Description of the Related Art

Conventionally, a technique for updating map data based on an output of a sensor installed on a moving body is known. For example, Patent Literature 1 reads that a driving support device 1 detects a change point of a partial map based on an output of a sensor installed on a moving body such as a vehicle, and information Is regarding a sensor accuracy at that time is transmitted to a server device 2 along the change point information D2. In the server device 2, weighting is given to the change point information D2 according to the information Is regarding the sensor accuracy. And the map data is updated based on the change point information to which this weight has been given.

### Citation List

### Patent Literature

Patent Literature 1: Japanese Unexamined Patent Publication No. 2016-156973

### SUMMARY OF THE INVENTION

In the invention described in Patent Literature 1, while the map data is updated in the server device 2 based on the information transmitted from the moving body such as the vehicle, on the moving body side the change point information D2 together with the information Is related to the sensor accuracy is transmitted each time the change point is detected, leading a possibility that a communication amount increases and a communication bandwidth is tightened.

As one of the problems to be solved by the present invention taken is a tightening of the communication bandwidth due to the increase in the communication amount as described above.

The invention according to a first aspect, which has been made to solve the above-described problem, includes a first acquisition unit that acquires peripheral information; a second acquisition unit that acquires reliability information related to reliability of the peripheral information acquired by the first acquisition unit; a generation unit that generates second information based on first information stored in a storage unit and the peripheral information; a transmission unit that transmits the second information to an external device; and a control unit that controls whether or not the transmission unit transmits the second information based on the reliability information.

The invention according to a second aspect is an information processing method executed by an information processing device including a transmission unit that transmits predetermined information, includes a first acquisition step of acquiring peripheral information; a second acquisition step of acquiring reliability information related to a reliability of the peripheral information acquired at the first acquisition step; a generation step of generating second information based on the first information stored in a storage unit and the peripheral information; and a control step of controlling whether or not the transmission unit transmits the second information based on the reliability information.

The invention according to a third aspect is to cause a computer to execute the information processing method according to the second aspect.

The invention according to a fourth aspect includes a first acquisition unit that acquires peripheral information; a second acquisition unit that acquires reliability information related to a reliability of vehicle position information; a generation unit that generates second information based on first information stored in a storage unit and the peripheral information; a transmission unit that transmits the second information to an external device; and a control unit that controls whether or not the transmission unit transmits the second information based on the reliability information.

The invention according to a fifth aspect is an information processing method executed by an information processing device including a first acquisition step of acquiring peripheral information; a second acquisition step of acquiring reliability information related to a reliability of vehicle position information; a generation step of generating second information based on first information stored in a storage unit and the peripheral information; and a control step for controlling whether or not the transmission unit transmits the second information based on the reliability information.

The invention according to a sixth aspect is to causes a computer to execute the information processing method according to the fifth aspect.

### BREIF DESCRIPTION OF THE PREFFERED EMBODIMENTS

FIG. 1 is a configuration of an information processing system having an information processing device according to a first embodiment of the present invention;
FIG. 2 is a schematic block diagram of the information processing device shown in FIG. 1;
FIG. 3 is a flowchart of operation of the information processing device shown in FIG. 2;
FIG. 4 is an explanatory drawing showing an example of a relationship between a first threshold value and a second threshold value;
FIG. 5 is a flowchart of an object detection operation in the object detection shown in FIG. 2; and
FIG. 6 is an explanatory drawing of a priority level in the information processing device according to a second example of the invention.

### DETAILED DESCRIPTION OF THE PREFFERED EMBODIMENTS

Hereinafter, an information processing device according to an embodiment of the present invention will be described. The information processing device according to the embodiment of the present invention, a first acquisition unit acquires peripheral information, and a second acquisition unit acquires reliability information related to a reliability of the peripheral information. Next, a generation unit generates second information based on first information stored in a storage unit and the peripheral information, and a transmission unit transmits the second information to an external device. At this time, a control unit controls whether or not the transmission unit transmits the second information based on the reliability information. In this way, since the control unit controls whether or not the transmission unit transmits the second information, it is eliminated to transmit all the information generated or acquired on a moving body side such as a vehicle to the external device such as a server device. Therefore, it is possible to suppress an increase in a communication amount and prevent tightening of a communication bandwidth. Note that when transmitting the second information, the reliability information used for determining whether to transmit the second information may be transmitted accompanied in some form.

The peripheral information may include planimetric feature information related to planimetric feature, the first information may be map information including planimetric feature information related to planimetric feature, and the second information may be information corresponding to a difference between planimetric feature information included in the map information and information related to planimetric feature included in the map. Thus, for example, planimetric feature information such as a signboard newly installed on a road or a newly opened road can be transmitted to an external device such as the server as information corresponding to the difference.

The control unit may allow the transmission unit to transmit the second information to the external device when the reliability indicated by the reliability information satisfies the first reference. This makes only the second information with the reliability which satisfies a fixed reference transmitted to the external device. Therefore, the increase in communication amount can be suppressed.

In addition, when the reliability indicated by the reliability information does not satisfy the first reference and satisfies the second reference, the control unit may not allow the transmission unit to transmit the second information to the external device, and hold at least any one of the second information and the periphery information the first acquisition unit acquired. Thus, the second information, even if there is no reliability for transmission to the external device, becomes possible to use with other devices etc. in the vehicle, for example.

In addition, when holding the second information, the control unit acquires information on a utilization result after holding the second information, and when contents of the information on the utilization result are good, the control unit may allow the transmission unit to transmit the second information to the external device. In this way, after the second information is held, for example, when the second information is found to be useful as a result of use in a vehicle control, even if not satisfying the first reference, the second information can be transmitted to the external device and be rendered effective in use.

In addition, when the reliability indicated by the reliability information does not satisfy the first reference and also does not satisfy the second reference, the control unit may not allow the transmission unit to transmit the second information to the external device, and hold at least any one of second information and the periphery information the first acquisition unit acquired. In this way, the reliability of the peripheral information, when low, can be discarded, and the capacity of the storage device such as a memory that holds the second information and the peripheral information can be prevented from being tightened.

Further, the second acquisition unit may acquire the reliability information based on a plurality of pieces of peripheral information acquired at different times. In this way, for example, by referring to a plurality of continuous reliability information, the reliability information in which an abnormal value is suddenly detected due to an influence of noise or the like can be eliminated, and it is possible to accurately determine whether or not to transmit the second information.

The peripheral information may include planimetric feature information related to planimetric feature, and the reliability information may include at least one of an estimated reliability of a position where the peripheral information is acquired and a recognition reliability of planimetric feature included in the peripheral information. In this way, by including the estimated reliability of the position, it is possible to transmit to the external device those having the position reliability about the second information a certain level or more. Further, by including the recognition reliability of planimetric feature, it is possible to transmit to the external device those having a recognition matching rate or the like of planimetric feature included in the second information above the certain level.

In addition, the peripheral information includes planimetric feature information about planimetric feature, and the control unit controls whether or not the transmission unit transmits the second information based on the priority level that determines which of a plurality of types of the reliability information is transmitted according to an attribute of planimetric feature. In this way, the priority level can be determined so that, for example, in the case of planimetric feature whose position is important, the priority level is set to value the estimated reliability of the position, and in the case of planimetric feature whose recognition reliability is important, he priority level is set to value the recognition reliability.

Also, the priority level is set such that, for example, when planimetric feature is a signboard such as a speed regulation sign and contents indicated by planimetric feature have important meaning, the recognition reliability of planimetric feature is valued. Further, when planimetric feature is a road marking line and a position of planimetric feature has an important meaning, the estimated reliability of the position is set to be valued. On the other hand, even the signboard such as the speed regulation sign may be used as planimetric feature for estimating the position of the vehicle. In such a case, both position reliability and recognition reliability are set to be valued. In this way, the priority level according to planimetric feature is set appropriately, and it becomes possible to make an appropriate determination as to whether or not to transmit the second information.

In an information processing method according to an embodiment of the present invention, in a first acquisition step peripheral information is acquired, and in a second acquisition step reliability information related to a reliability of the peripheral information is acquired. Next, in a generation step second information is generated based on first information stored in a storage unit and the peripheral information. And in a control step controlled is whether or not the transmission unit transmits the second information based on the reliability information. In this way, since the control unit controls whether or not the transmission unit transmits the second information, all the information generated or acquired on the moving body side, such as the vehicle, is not necessarily transmitted to the external device, such as a server device. Therefore, it is possible to suppress an increase in communication amount and prevent tightening of a communication bandwidth.

Moreover, the information processing method mentioned above may also be an information processing program a computer executes. By doing so, it is no longer necessary to use the computer to transmit all information generated or acquired on the moving body side such as the vehicle to the external device such as the server device, thereby suppressing the increase in communication amount and preventing tightening of communication bandwidth.

In the information processing device according to other embodiment of the present invention, a first acquisition unit acquires the peripheral information, and a second acquisition unit acquires the reliability information related to reliability of vehicle position information. Next, a generation unit generates second information based on first information stored in the storage unit and the peripheral information, and a transmission unit transmits the second information to the external device. At this time, a control unit controls whether or not the transmission unit transmits the second information based on the reliability information. By doing in this way, since the control unit controls whether or not the transmission unit transmits the second information, all the information generated or acquired on the moving body side, such as the vehicle, is not necessarily transmitted to the external devices, such as a server device. Therefore, it is possible to suppress increase in communication amount and prevent tightening of communication bandwidth.

The information processing device according to other embodiment of the present invention, in a first acquisition step the peripheral information is acquired, and in a second acquisition step the reliability information related to a reliability of the vehicle position information is acquired. Next, in a generation step second information is generated based on first information stored in the storage unit and the peripheral information. And in a control step whether or not the transmission unit transmits the second information is controlled based on the reliability information. By doing in this way, since the control unit controls whether or not the transmission unit transmits the second information, all the information generated or acquired on the moving body side, such as the vehicle, is necessarily transmitted to the external device, such as the server device. Therefore, it is possible to suppress increase in communication amount and prevent tightening of communication bandwidth.

Moreover, the information processing method mentioned above may also be an information processing program a computer executes. By doing so, it is no longer necessary to use the computer to transmit all information generated or acquired on the moving body side such as the vehicle to the external device such as the server device, thereby suppressing increase in communication amount and preventing tightening of communication bandwidth.

### Embodiment 1

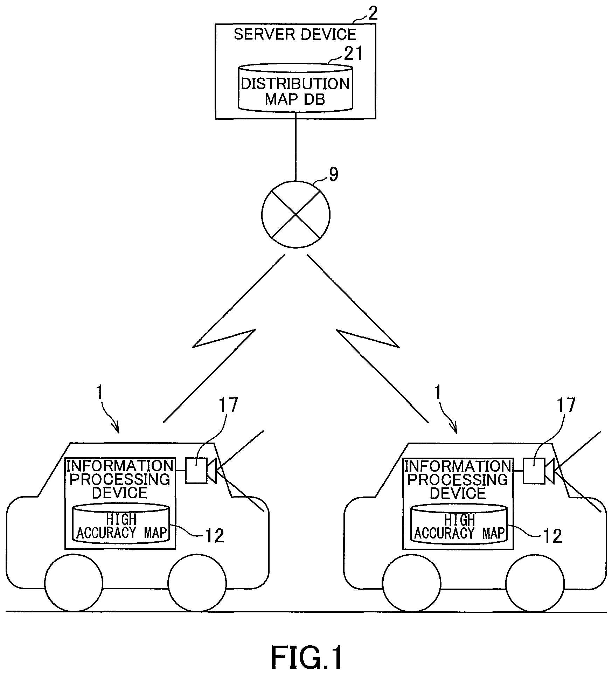

The information processing device according to a first embodiment of the present invention will be described with reference to FIGS. 1 to 5. As shown in FIG. 1, the information processing system including the information processing device 1 according to the present embodiment includes the information processing device 1 that moves together with each vehicle as the moving body, and the server device 2 that communicate with the information processing device 1 via the network 9. Then, the information processing system updates the distribution map DB21 (Database) that is the map data held by the server device 2, based on information transmitted from each information processing device 1.

The server device 2 as the external device stores the distribution map DB21 and, in response to a request from the information processing device 1, extracts from the distribution map DB21, and transmits, the map data corresponding to an area where the information processing device 1 as the request source exists. Or when the server device 2 grasps a driving route of the information processing device 1 beforehand, the map data along the driving route is push-distributed from the server side at a required timing. Moreover, the server device 2 receives the difference information mentioned later from each information processing device 1, and updates the distribution map DB21 based on the difference information.

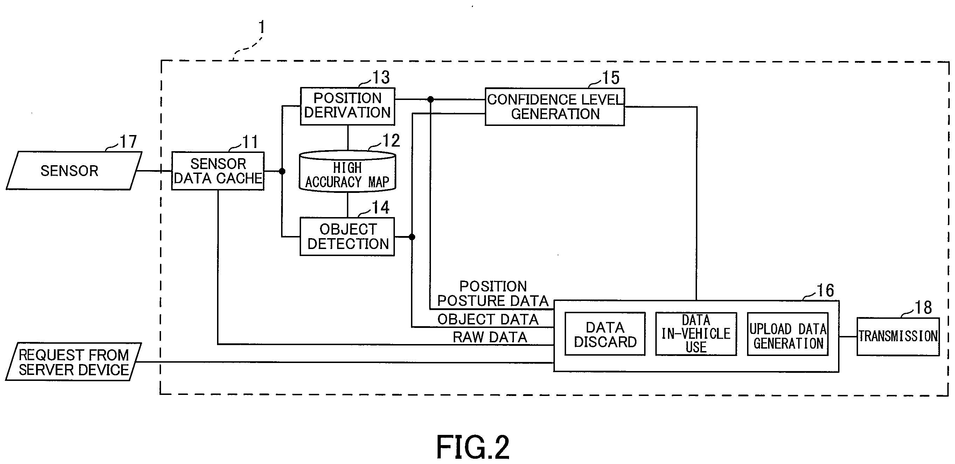

FIG. 2 shows a schematic block configuration of the information processing device 1 according to the present embodiment. The information processing device 1 includes the sensor data cache unit 11, the high accuracy map DB12, the location derivation unit 13, the object detection unit 14, the confidence level generation unit 15, the data utilization determination unit 16, and the transmission unit 18.

The information processing device 1 uploads information based on the peripheral information detected by the sensor 17 to the server device 2 when a predetermined condition is satisfied. The information processing device 1 may be configured as a unit of the in-vehicle device such as the navigation device, or may be configured as a single device. Alternatively, the portable terminal device such as a notebook PC may be used as long as the sensor 17 can be connected.

The sensor 17 is a sensor for recognizing information on the host vehicle such as a position of host vehicle and surrounding environment (planimetric feature present in the vicinity), and includes the camera, the lidar (Lidar: Light Detection And Ranging), GPS (Global Positioning System) receiver, the acceleration sensor, the speed sensor, etc. The camera generates a colored image representing situation of outside world. The lidar discretely measures distance to an object existing in the outside world, and recognizes position, shape, etc. of the object as a three-dimensional point group. The GPS receiver generates latitude and longitude position information representing the current vehicle position. The acceleration sensor detects an acceleration of the vehicle. The speed sensor detects the speed of the vehicle. The sensor 17 may include the inertial measurement device (IMU: Inertial Measurement Unit) or the gyro sensor for recognizing the posture (orientation) of the vehicle and correcting the acquired data of other sensors. Further, the sensor 17 may include the speed sensor for detecting a speed of the vehicle, a raindrop sensor for detecting whether or not it is raining, a thermometer, a hygrometer, and the like. Information on the vehicle such as the vehicle position and information on the surrounding environment detected and acquired by the sensor 17 are outputs to the information processing device 1 as the peripheral information.

The sensor data cache unit 11 is a cache memory that temporarily holds the peripheral information detected by the sensor 17. That is, the sensor data cache unit 11 functions as a first acquisition unit that acquires the peripheral information.

The high accuracy map DB12 is a database of the high accuracy map including, for example, contents (meaning) such as the signboard (road sign, etc.) or the traffic sign such as the stop-line, the road marking road line such as the center line, information (the planimetric feature information) related to planimetric feature such as a structure along the road. That is, the high accuracy map DB12 functions as first information stored in the storage unit. Such the high accuracy map DB12 can be used for, for example, automatic driving of automobile and ADAS (advanced driving system).

The location derivation unit 13 outputs to the confidence level generation unit 15 or the data utilization determination unit 16, for example, the position information of the host vehicle generated by the GPS receiver or the posture information indicating any traveling direction, and the like that are stored in the sensor data cache unit 11 as a position/posture data. Further, the location derivation unit 13 acquires, for example, the DOP (Dilution-of-Precision) value, which is a numerical value indicating degree of deterioration of GPS positioning accuracy, as the reliability information for generating a confidence level described later. That is, the DOP value is an estimated reliability of the position of the host vehicle when the peripheral information is acquired using the sensor 17, and the location derivation unit 13 functions as the second acquisition unit.

The object detection unit 14, if there is a difference (divergence) upon comparing meaning (contents of a sign such as a speed limit) of the object such as the sign included in the high accuracy map DB12 or shapes regarding planimetric feature (object), for example, the traffic sign detected by the camera 17 of the sensor 17, outputs the difference to the confidence level generation unit 15 and the data utilization determination unit 16 as the difference information. That is, the object detection unit 14 functions as a generation unit that generates the difference information (the second information) based on the high accuracy map DB12 (the first information stored in the storage unit) and the peripheral information. In addition, the data of the whole object in which the difference is generated but the difference may also be as the second information, for example. That is, any information corresponding to the difference may be used.

Further, the object detection unit 14 extracts, for example, a feature amount from the image captured by the camera as the reliability information for generating a confidence level to be described later, and acquires the recognition matching rate of the feature amount. That is, the recognition matching rate of the feature amount is a recognition reliability of planimetric feature included in the peripheral information, and the object detection unit 14 functions as a second acquisition unit.

The confidence level generation unit 15 generates the confidence level based on the DOP value output from the location derivation unit 13 and the recognition accuracy rate of the feature amount output from the object detection unit 14. The confidence level is composed of host vehicle position/posture reliability information that is the estimated reliability of the position and object detection reliability information that is the reliability of recognition of planimetric feature.

The vehicle position/posture reliability information is, for example, normalized to a numerical value from 0 to 100 based on the DOP value described above. The object detection reliability information is taken to normalize the above-described feature amount recognition matching rate to the numerical value ranging from 0 to 100 for example.

Based on the confidence level generated by the confidence level generation unit 15, the data utilization determination unit 16 determines how to use the position/posture data output by the location derivation unit 13, the object data output by the object detection unit 14, and the raw data detected by the sensor 17 stored in the sensor data cache unit 11. Here, the raw data is a data output from the sensor for recognizing planimetric feature (object) such as an image data captured by the camera and point group data acquired by the Lidar.

A Type of utilization determined by the data utilization determination unit 16 is any of 1) to upload to the server device 2, 2) to utilize in the vehicle where the information processing device 1 is installed (in-car utilization), or 3) to discard. Examples of in-car use include steering wheel, brake control during automatic driving, and warning to a driver during manual driving. The discarding is not limited to the erasing operation, but may be a method of overwriting new data.

That is, the confidence level generation unit 15 and the data utilization determination unit 16 function as a control unit that controls whether or not the transmission unit 18 transmits the difference information (the second information) based on the confidence level generated based on the recognition matching rate (reliability information) of the DOP value and feature amount.

Note that the data utilization determination unit 16 may upload only necessary data among position/posture data, the object data (difference information), and raw data in response to a request from the server device 2. Or the request from the server device 2 may designate an attribute of planimetric feature, such as only the traffic sign, for example, among the recognized planimetric features (objects).

The transmission unit 18 uploads the difference information generated by the object detection unit 14 to the server device 2 when the data utilization determination unit 16 determines to upload to the server device 2. In addition to the difference information (or instead of the difference information), the transmission unit 18 may transmit (upload to the server device 2) the position/posture data, object data (data corresponding to the result of object detection that is information generated based on the data (peripheral information) acquired by the sensor 17), all or unit of the raw data, etc. In addition, similar to the difference information, these pieces of information may be transmitted when the data utilization determination unit 16 determines to upload to the server device 2.

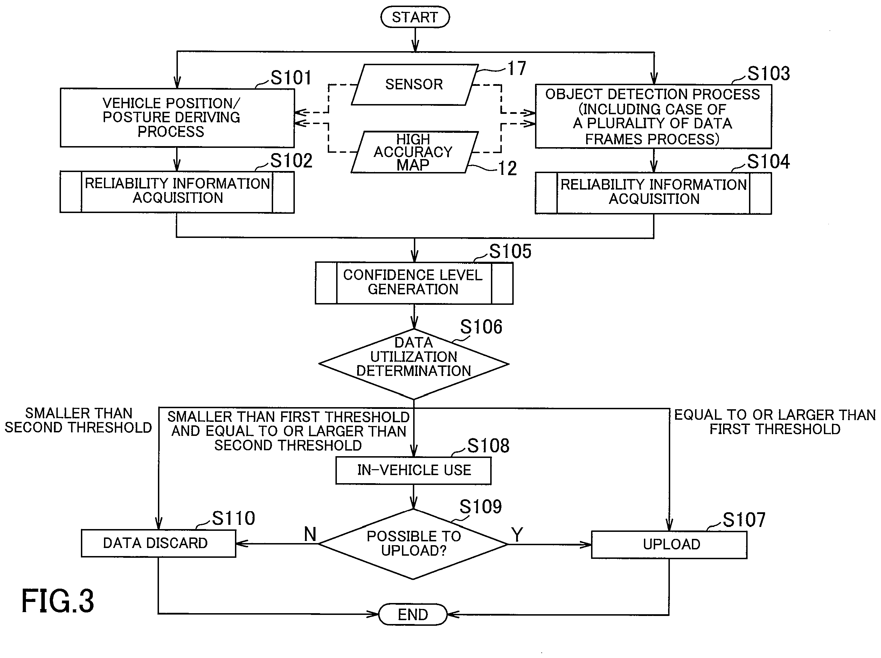

Among the blocks shown in FIG. 3, the high accuracy map DB12, the location derivation unit 13, the object detection unit 14, the confidence level generation unit 15, and the data utilization determination unit 16 are, for example, configured by a micro computer (or microcomputer) having a CPU and a memory. The sensor data cache unit 11 can be configured by a semiconductor memory such as RAM. The transmission unit 18 can be configured by a wireless communication device or the like. In this case, the flowchart described below is an information processing program along which a computer (microcomputer) executes an information processing method.

Next, an operation (information processing method) in the information processing device 1 configured as described above will be described with reference to the flowchart of FIG. 3.

First, the location derivation unit 13 executes a vehicle position/posture deriving process based on a detection result of the GPS receiver or the like (step S 101), and acquires a DOP value (reliability information) (step S102). On the other hand, the object detection unit 14 executes an object detection process based on an image captured by the camera or the like (step S103), and acquires the recognition matching rate of the feature amount (reliability information) (step S104). Steps S101, S102 and steps S103, S104 are executed in parallel as shown in FIG. 3. On the other hand, when acquiring the recognition matching rate (reliability information) of the feature amount using a data stored in the high accuracy map 12 (first information), first, step S101 is executed to determine a position/posture of a host vehicle, and after specifying the posture, step S103 is executed by referring to the map data at the corresponding position.

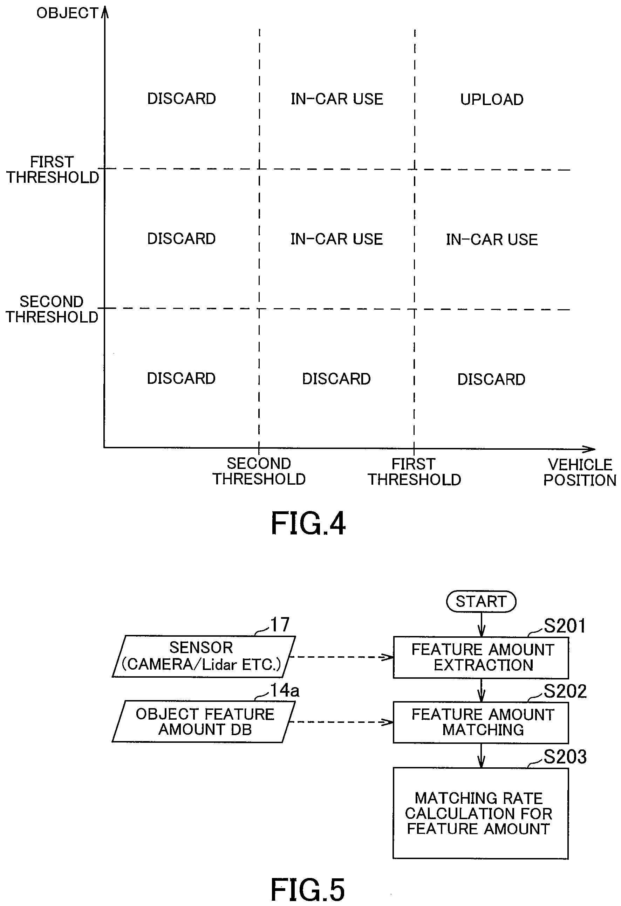

FIG. 5 shows a flowchart of an example of object detection process executed by the object detection unit 14. First, data acquired by the sensor 17, for example, the feature amount of planimetric feature (object) from, for example, the image taken by the camera (step S201) are extracted by a known method. Next, the extracted feature amount is matched based on the object feature amount DB14a of the object detection unit 14 (step S202). The object planimetric feature DB14a is generated by machine learning, for example. Then, the matching rate of the feature amount is calculated as a result of matching.

In the object detection process described above, one planimetric feature included in the image captured by the camera may be subjected to a process as shown in FIG. 5 for a plurality of frames. That is, the object reliability may be calculated (acquired) from a plurality of pieces of peripheral information acquired at different times. In this way, for example, among the object reliabilities obtained from the plurality of frames, cases in which abnormal values are detected unexpectedly due to the influence of noise or the like can be excluded. Further, even when the object reliability is low with only one frame, the object reliability effectively improves by analyzing with the plurality of frames.

Next, the confidence level is generated in the confidence level generation unit 15 (step S105). As described above, the confidence level includes the vehicle position/posture reliability information and the object reliability information obtained by normalizing the DOP value or the recognition matching rate of the feature amount.

Next, the data utilization determination unit 16 determines whether to upload, use in the vehicle, or discard (step S 106). In this determination, a threshold is provided for the confidence level. In this embodiment, when both the vehicle position/posture reliability information and the object reliability information are equal to or larger than the first threshold, upload is determined. Further, when any of the vehicle position/posture reliability information and the object reliability information is smaller than the first threshold value, and both the vehicle position/posture reliability information and the object reliability information are equal to or larger than the second threshold value, use in the car is determined. Further, when any of the vehicle position/posture reliability information and the object reliability information is smaller than the second threshold, discard is determined. Note that the threshold may be desirable to be set not fixed but variable value. It is also possible to dynamically set a threshold according to the situation such that the threshold value is set variably by setting a stricter threshold when there is a lot of data as data to be transmitted from the information processing device 1 to the server device 2 that can be determined to be transmittable, and the communication bandwidth is tightened, so as to transmit only more reliable data.

FIG. 4 summarizes relationship between the vehicle position/posture reliability information, the object reliability information described above, the first threshold value and the second threshold value. In FIG. 4, assume that the vehicle position/posture reliability information is represented by the horizontal axis (vehicle position), and the object reliability information is represented by the vertical axis (object). The uploaded data is one with which the distribution map DB21 of the server device 2 may be updated. Therefore, since such data may affect other vehicle, the reliability is set large. On the other hand, in-car use becomes lower reliable than upload because the scope of influence is only within the car.

As shown in FIG. 4, the second threshold value is smaller than the first threshold value. That is, the second threshold value has a smaller reliability than the first threshold value.

That is, the first threshold is the first reference, and the second threshold is the second reference. In this embodiment, while the vehicle position/posture reliability information is generated from the DOP value, and the object reliability information is generated from the recognition matching rate of the feature amount, the threshold may be directly set to the DOP value and the recognition matching rate of the feature amount. In addition, the vehicle position/posture reliability information and the object reliability information may be set a smaller value as the reliability is larger, and in this case, if smaller than the first threshold, upload is performed, if equal to or larger than the first threshold and smaller than the second threshold, use in the vehicle is performed, and if equal to or larger than the second threshold, discard is performed.

Returning to description of FIG. 3. When the data utilization determination is made in step S106, and the upload is determined to be possible, the data utilization determination unit 16 allows the transmission unit 18 to upload the position/posture data, the object data (difference information), and confidence level to the server device 2 (Step S 107).

The reason why the confidence level is uploaded in step S107 is that the confidence level can be used when the distribution map DB21 is updated in the server device 2. The confidence level is not necessarily required to upload.

Further, when it is determined in step S106 that the data is utilized in the vehicle, it is held in the data utilization determination unit 16 until being read from other vehicle-mounted device or the like for utilization in the vehicle (step S108). Or the data may be output to other vehicle equipment etc. from the data utilization determination unit 16 after once being held. Then, the data utilization determination unit 16 determines again whether or not the data used in the vehicle can be uploaded (step S 109). For example, even though warning is given, it turns out an error in view of the actual driving result or the detection result of other sensors, the data is discarded because the upload is impossible (step S110). On the other hand, when it turns out not an error, the data is uploaded by the transmission unit 18 as upload is possible considering that the result of utilization in the vehicle was favorable (S107). In this case, the data utilization determination unit 16 acquires information on whether or not there is an error from other in-vehicle devices as information on the utilization result.

If the data is determined in step S106 to be discarded, the data utilization determination unit 16 discards the target data in the sensor data cache unit 11 and the target data held in the data utilization determination unit 16 (step S110).

In the above description, while the confidence level includes both the estimated reliability of the position where the peripheral information is acquired (vehicle position/posture reliability information) and the recognition reliability of planimetric feature included in the peripheral information (object reliability information), only one of them may be sufficient.

The confidence level is not limited to the estimated reliability of the position where the peripheral information is acquired and the recognition reliability of planimetric feature included in the peripheral information, but information based on the weather, time zone, speed, acceleration, etc. when the peripheral information is acquired may be included.

According to the present embodiment, in the information processing device 1, the sensor data cache unit 11 acquires the peripheral information that is the detection result of the sensor 17, and the location derivation unit 13 and the object detection unit 14 acquire the DOP value and the recognition matching rate of the feature amount, respectively. Next, the object detection unit 14 generates difference information based on the high accuracy map DB12 and the peripheral information, and the transmission unit 18 transmits the difference information. At this time, the confidence level generation unit 15 generates the confidence level including the vehicle position/posture reliability information and the object reliability information from the DOP value and the recognition matching rate, and the data utilization determination unit 16 determines whether to upload the difference information based on the confidence level. In this way, the confidence level generation unit 15 and the data utilization determination unit 16 control whether the transmission unit 18 transmits the difference information. Therefore, it becomes eliminated that all information generated or acquired on the moving body side such as the vehicle is transmitted to the external device such as the server device 2. Therefore, it is possible to suppress an increase in communication amount and prevent tightening of the communication bandwidth.

Moreover, the object detection unit 14, provided with the high accuracy map DB12 including planimetric feature information regarding planimetric feature, outputs the difference information indicating the difference between planimetric feature included in the high accuracy map DB12 and planimetric feature detected by itself. In this way, for example, the planimetric feature information such as a newly installed signboard or a newly opened road can be transmitted to the server device 2 as the difference information.

Further, the data utilization determination unit 16 causes the transmission unit 18 to upload the difference information to the server device 2 when the confidence level is equal to or larger than the first threshold value. By doing in this way, only the difference information of the reliability which satisfies a fixed reference can be transmitted to the server device 2. Therefore, the communication amount can be suppressed to increase.

Further, when the confidence level is smaller than the first threshold and equal to or larger than the second threshold, the data utilization determination unit 16 does not cause the transmission unit 18 to upload the difference information to the server device 2 and uses the difference information in the vehicle. By doing in this way, even if the difference information does not have the reliability to be uploaded to the server device 2, the difference information becomes possible to utilize in other devices etc. in the vehicle, for example.

Further, when the data utilization determination unit 16, when determining that the difference information is utilized in the vehicle, acquires information related to the result of utilizing the difference information in the vehicle, and when the contents of the information related to the result of use in the vehicle are good, causes the transmission unit 18 to transmit the difference information to the server device 2. In this way, for example, when the difference information is found to be useful as the result of use of vehicle control after the difference information is retained, the difference information, even if smaller than the first threshold, is transmitted to the server device 2 so as to be used effectively.

Moreover, the transmission unit 18 has discarded the difference information when the data utilization determination unit 16 determines that the confidence level is smaller than the second threshold value. In this way, the reliability of the peripheral information, if small, can be discarded, preventing the capacity of the storage device such as the memory holding the difference information from being tightened.

Further, the confidence level includes the vehicle position/posture reliability information and the object reliability information. In this way, inclusion of the host vehicle position/posture reliability information enables to transmit to the server device 2 those with a certain level of reliability of position regarding the difference information. Further, inclusion of the object reliability information enables to transmit to the server device 2 those with a certain level of the recognition matching rate or the like of planimetric feature included in the difference information.

### Embodiment 2

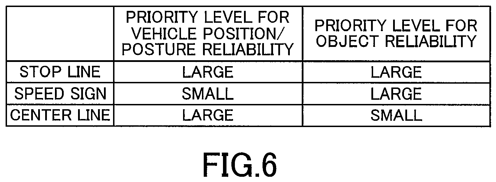

Next, the information processing device according to a second embodiment of the present invention will be described with reference to FIG. 6. The same units as those in the first embodiment described above are denoted by the same reference numerals, and description thereof is omitted.

In the first embodiment, the vehicle position/posture reliability information and the object reliability information included in the confidence level are both determined to be equal to or larger than the first threshold, or smaller than the first threshold and equal to or larger than the second threshold. However, depending on the attribute of planimetric feature, there may be a case where the vehicle position/posture reliability is more valued or a case where the object reliability is more valued. For example, in the case of FIG. 4, since "utilization in the vehicle" and "discard" in the right column are larger than the first threshold for the vehicle position/posture reliability, so it may be possible to upload if the vehicle position/posture reliability is valued. Therefore, in this embodiment, it is determined which of the vehicle position/posture reliability and the object reliability is to be valued according to planimetric feature attribute.

FIG. 6 shows an example of the priority level that determines which of the vehicle position/posture reliability and the object reliability is to be valued according to the above-described planimetric feature attribute. In FIG. 6, three examples of planimetric feature are the stop-line (temporary stop-line), the speed sign (example of the signboard), and the center line. Since the stop-line is required for the vehicle to stop at the position of the stop-line, both the vehicle position/posture reliability and the object reliability are valued. Accordingly, the priority level is set to "large" for both the vehicle position/posture reliability and the object reliability.

Next, in the speed indicator, because the contents indicated by the indicator are important, but the installation position of the indicator is considered to be not so important, the object reliability is valued. Therefore, the priority level of the vehicle position/posture reliability is set "small", and the priority level of the object reliability is set "large".

Next, since the position of the center line is important in order to avoid lane departure, reverse running, etc. but it is considered that there is no problem even to some extent to consider that the recognition as the center line is a line drawn along the direction of travel, the vehicle position/posture reliability is valued. Accordingly, the priority level of the vehicle position/posture reliability is set "large", and the priority level of the object reliability is set "small".

As described above, the priority level is set so that the recognition reliability of planimetric feature is valued when planimetric feature is the signboard such as a speed regulation sign and the contents indicated by planimetric feature is important. Further, when planimetric feature is, for example, a road lane marking and the position of planimetric feature has an important meaning, the position estimation reliability is set valued. On the other hand, even the signboard such as a speed regulation sign may be used as planimetric feature for estimating the position of the vehicle. In such a case, both position reliability and recognition reliability are set valued. In this way, the priority level according to planimetric feature is set appropriately, and it becomes possible to make an appropriate determination as to whether or not to transmit the second information.

Such priority level is included in the data utilization determination unit 16 as a database or the like, and is considered when determining in step S106 of the flowchart of FIG. 3, for example. It is taken as a method of consideration that when the priority level is "large", uploading is performed when the priority level is equal to or larger than the first threshold, and that when the priority level is "small", uploading is performed when the priority level is equal to or larger than the second threshold. That is, whether or not to transmit the difference information (second information) or the like to the transmission unit 18 is controlled based on the priority level.

Further, when the priority level is "small", the reliability is passed over, that is, the reliability may not be considered. In that case, it is determined to upload the difference information or the like based on only one of the vehicle position/posture reliability and the object reliability.

In addition, the priority level is not limited to two stages of "large" and "small", but may be three stages of "large", "medium", and "small", or may be quantified. When the priority level is three levels, "large" may be equal to or larger than the first threshold, "medium" may be lower than the first threshold and equal to or larger than the second threshold, and "small" may be passed over.

In the case of FIG. 6, the priority level in the case of uploading is shown. However, the case of in-car use may also be determined separately based on the same way, or may be set not to use the priority level.

Further, in the present embodiment, the priority level is described using the vehicle position/posture reliability and the object reliability. However, as in the first embodiment, the priority level may be set for the weather, time zone, speed or acceleration when the peripheral information is acquired, for example. That is, it is possible to set which of the plurality of types of reliability information is important as the priority level.

According to the present embodiment, the data utilization determination unit 16 controls whether or not the transmission unit 18 uploads the difference information based on the priority level that determines which of the vehicle position/posture reliability and the object reliability is valued, which is set according to the attribute of planimetric feature. In this way, the priority level is set so that the position/posture reliability of the vehicle is valued in the case of planimetric feature of which position is important, and the object reliability is valued in the case of planimetric feature of which recognition reliability is important.

For example, when planimetric feature is the signboard, the recognition reliability of planimetric feature is set valued. In this way, when planimetric feature is the signboard, particularly a road sign, it is important to recognize the contents of the sign, and thus the priority level is set so that the recognition reliability is valued.

In the above description, the signboard, while described as a road sign, is not limited to the one requiring recognition according to traffic regulations, and may be the signboard of a store or the like that serves as a landmark.

Further, the present invention is not limited to the above embodiment. That is, those skilled in the art could implement various modifications in accordance with conventionally known knowledge without departing from the scope of the present invention. Of course, such modifications are included in the scope of the present invention as long as the configuration of the information processing device of the present invention is provided.

### Reference Signs List

- 1: Information processing device
- 2: Server device (external device)
- 11: Sensor data cache (first acquisition unit)
- 12: High accuracy map DB (storage unit)
- 13: Location derivation unit (second acquisition unit)
- 14: Object detection unit (second acquisition unit, generation unit)
- 15: Confidence level generation unit (control unit)
- 16: Data utilization determination unit (control unit)
- 17: Sensor
- 18: Transmission unit
- S101: Host vehicle position/posture information derivation process (first acquisition step)
- S102: Reliability information acquisition process (second acquisition step)
- S103: Object detection process (first acquisition step, generation step)
- S104: Reliability information acquisition process (second acquisition step)
- S105: Confidence level generation process (control step)
- S106: Data utilization determination (control step)

## Claims

1. An information processing device comprising:
a first acquisition unit that acquires peripheral information;
a second acquisition unit that acquires reliability information related to reliability of the peripheral information acquired by the first acquisition unit;
a generation unit that generates second information based on first information stored in a storage unit and the peripheral information;
a transmission unit that transmits the second information to an external device; and
a control unit that controls whether or not the transmission unit transmits the second information based on the reliability information.

2. The information processing device according to claim 1, wherein
the peripheral information includes planimetric feature information related to planimetric feature, the first information is map information including planimetric feature information related to planimetric feature, and
the second information is information corresponding to a difference between planimetric feature information included in the map information and information about planimetric feature included in the peripheral information.

3. The information processing device according to claim 1 or 2, wherein
the control unit allows the transmission unit to transmit the second information to the external device when a reliability indicated by the reliability information satisfies a first reference.

4. The information processing device according to claim 3, wherein
the control unit avoids the transmission unit to transmit the second information to the external device when the reliability indicated by the reliability information satisfies not the first reference but a second reference, and holds at least one of the second information and the peripheral information acquired by the first acquisition unit.

5. The information processing device according to claim 4, wherein
the control unit, when the second information is held, acquires information on a utilization result after the second information is held, and when contents of the information on the utilization result are good, allows the transmission unit to transmit the second information to the external device.

6. The information processing device according to claim 4 or 5, wherein
the control unit, when the reliability indicated by the reliability information satisfies neither the first reference nor the second reference, avoids the transmission unit to transmit the second information to the external device, and avoids holding the at least one of the second information and the peripheral information acquired by the first acquisition unit.

7. The information processing device according to any one of claims 1 to 6, wherein
the second acquisition unit acquires the reliability information based on a plurality of pieces of the peripheral information acquired at different times.

8. The information processing device according to any one of claims 1 to 7, wherein
the peripheral information includes planimetric feature information related to planimetric feature, and
the reliability information includes at least one of an estimated reliability of a position where the peripheral information is acquired and a recognition reliability of planimetric feature included in the peripheral information.

9. The information processing device according to any one of claims 1 to 8, wherein
the peripheral information includes planimetric feature information related to planimetric feature, and
the control unit controls whether or not the transmission unit transmits the second information based on a priority level that determines which of a plurality of types of the reliability information is valued according to an attribute of planimetric feature.

10. The information processing device according to claim 9, wherein
the priority level is set so that when meaning or contents indicated by planimetric feature is valued, a recognition reliability of planimetric feature is valued or when position information of planimetric feature is valued, the estimated reliability of the position is valued.

11. The information processing device according to any one of claims 1 to 10, wherein
the transmission unit transmits information generated based on the peripheral information, or a part of the peripheral information.

12. An information processing method executed by an information processing device including a transmission unit that transmits predetermined information, the method comprising:
a first acquisition step of acquiring peripheral information;
a second acquisition step of acquiring reliability information related to a reliability of the peripheral information acquired at the first acquisition step;
a generation step of generating second information based on the first information stored in a storage unit and the peripheral information; and
a control step of controlling whether or not the transmission unit transmits the second information based on the reliability information.

13. An information processing program, wherein
the information processing program causes a computer to execute the information processing method according to claim 12.

14. An information processing device, comprising:
a first acquisition unit that acquires peripheral information;
a second acquisition unit that acquires reliability information related to a reliability of vehicle position information;
a generation unit that generates second information based on first information stored in a storage unit and the peripheral information;
a transmission unit that transmits the second information to an external device; and
a control unit that controls whether or not the transmission unit transmits the second information based on the reliability information.

15. An information processing method executed by an information processing device including a transmission unit that transmits predetermined information, comprising:
a first acquisition step of acquiring peripheral information;
a second acquisition step of acquiring reliability information related to a reliability of vehicle position information;
a generation step of generating second information based on first information stored in a storage unit and the peripheral information; and
a control step for controlling whether or not the transmission unit transmits the second information based on the reliability information.

16. An information processing program, wherein
the information processing program causes a computer to execute the information processing method according to claim 15.
